# EUROPÄISCHE PATENTSCHRIFT

(11) **EP 2 805 791 B1**
(45) Veröffentlichungstag und Bekanntmachung des Hinweises auf die Patenterteilung: **26.09.2018**
(21) Anmeldenummer: 14167119.8
(22) Anmeldetag: 06.05.2014
(51) Int. Cl.: B23K 26/03, B23K 26/38, B23K 26/30, B23K 31/12

(54) **Verfahren und Vorrichtung zum Erkennen eines Schnittabrisses**
Method and device for detecting a cut section
Procédé et dispositif de détection d'une ébauche de coupe

(30) Priorität: 23.05.2013 DE 102013209526
(43) Veröffentlichungstag der Anmeldung: 26.11.2014
(73) Patentinhaber: TRUMPF Werkzeugmaschinen GmbH + Co. KG, 71254 Ditzingen (DE)
(72) Erfinder: Hesse, Tim, 71254 Ditzingen (DE); Schindhelm, David, 70176 Stuttgart (DE); Regaard, Boris, 70839 Gerlingen (DE)
(74) Vertreter: Kohler Schmid Möbus Patentanwälte

(56) Entgegenhaltungen:
- EP-A2- 0 470 583
- DE-A1- 4 336 136
- DE-A1-102011 003 717
- JP-A- H1 015 679
- JP-A- H04 105 780
- JP-A- 2001 138 082

## Beschreibung

Die vorliegende Erfindung betrifft ein Verfahren zum Erkennen eines Schnittabrisses beim Schneiden mit einem Hochenergiestrahl, insbesondere mit einem Laserstrahl, umfassend: Aufnehmen eines Bildes eines zu überwachenden Bereichs des Werkstücks, der einen Wechselwirkungsbereich des Hochenergiestrahls mit dem Werkstück umfasst. Die Erfindung betrifft auch eine zugehörige Vorrichtung zum Erkennen eines Schnittabrisses.

Beim thermischen Schneiden eines Werkstücks mit einem Hochenergiestrahl, beispielsweise mit einem Plasmastrahl oder mit einem Laserstrahl, kann ein Schnittabriss auftreten, d.h. der Hochenergiestrahl schneidet nicht mehr vollständig durch das (metallische) Werkstück, da die Streckenenergie nicht ausreicht, um das komplette Schnittspaltvolumen aufzuschmelzen. Gründe hierfür sind häufig eine zu hohe Vorschubgeschwindigkeit, eine zu geringe Leistung des Hochenergiestrahls, ein zu geringer Sauerstoff-Gasdruck oder eine zu starke Defokussierung der verwendeten Hochenergiestrahlung. Beim Eintritt des Schnittabrisses ist die Schnittfuge bzw. der Schnittspalt nicht mehr über die komplette Werkstückdicke ausgeprägt, so dass der Hochenergiestrahl nur noch eine Furche in das Werkstück schneidet.

Aus der DE 10 2011 003 717 der Anmelderin sind eine Vorrichtung und ein Verfahren zur Prozessüberwachung bzw. zur Prozessregelung eines Laserschneidprozesses bekannt geworden, welche die Erfassung und Auswertung einer großen Anzahl von den Laserschneidprozess charakterisierenden Kenngrößen ermöglichen. Als charakteristische Kenngröße wird unter anderem das Erkennen eines Schnittabrisses genannt. Der Schnittabriss wird erkannt, indem während des Laserschneidprozesses Materialbegrenzungen in Form von Schnittkanten detektiert werden und anhand der Schnittkanten eine Schnittspaltbreite ermittelt wird. Beim Unterschreiten einer vorgegebenen Schnittspaltbreite wird auf das Vorliegen eines Schnittabrisses geschlossen. Bei Werkstücken aus Edelstahl kann ein Schnittabriss auch detektiert werden, wenn die Breite einer im Wärmebild erfassten leuchtenden Fläche, die im Wesentlichen der Breite der Schneidfront entspricht, größer ist als die anhand der Materialbegrenzungen ermittelte Schnittspaltbreite.

### Aufgabe der Erfindung

Der Erfindung liegt die Aufgabe zugrunde, ein Verfahren und eine Vorrichtung bereitzustellen, welche ein zuverlässiges Erkennen eines Schnittabrisses beim Schneiden eines Werkstücks mit einem Hochenergiestrahl ermöglichen.

### Gegenstand der Erfindung

Diese Aufgabe wird erfindungsgemäß durch ein Verfahren der eingangs genannten Art gelöst, welches gekennzeichnet ist durch die Schritte: Auswerten des aufgenommenen Bildes zur Detektion von Schlacketropfen an einem einer Schneidfront entgegengesetzten Ende des Wechselwirkungsbereichs, sowie Erkennen des Schnittabrisses anhand des Auftretens der Schlacketropfen.

Bei einem Schnittabriss reicht die Streckenenergie nicht aus, um das komplette Schnittspaltvolumen aufzuschmelzen. Entsprechend kann die Schlacke nicht mehr nach unten aus dem Schnittspalt ausgetrieben werden - sie strömt vielmehr entgegen der Vorschubrichtung in dem nur teilweise ausgeprägten Schnittkanal nach hinten zur Oberseite des Werkstücks und tritt dort aus dem beim Schneiden gebildeten Schnittspalt aus.

Das bei der Reaktion mit dem typischerweise beim Schneiden, beispielsweise beim Brennschneiden, verwendeten Schneid-Sauerstoff entstehende Eisenoxid (FeO) besitzt mit einer Dichte von ca. 5,7 kg/dm³ eine um 27% geringere Dichte als das ursprüngliche Eisen (Fe), welches typischerweise den Grundwerkstoff bzw. einen Großteil des Grundwerkstoffs des zu bearbeiten Werkstücks bildet. Das entstehende Schlackevolumen erfährt somit sowohl durch die Herabsetzung der FeO-Dichte als auch durch die Massenzunahme bei der Oxidation eine Volumenzunahme gegenüber dem Grundwerkstoff. Dies führt dazu, dass die nicht nach unten austreibbare Schlacke im Nachlauf nach hinten oben aus dem Schnittspalt heraustritt. Diese nach hinten oben herausquellenden Schlacketropfen können in dem zu überwachenden Bereich, von dem während des Schneidprozesses ein Bild aufgenommen wird, detektiert werden.

Durch Schneidexperimente konnte ein direkter Zusammenhang dieser Schlacketropfen mit einem Schnittabriss, insbesondere beim Brennschneiden, nachgewiesen werden. Bei einem Gutschnitt oder auch beim Vorliegen einer Gratbildung ist eine derartige Schlacke-Strömung nicht beobachtet worden.

Bei einer Variante des Verfahrens umfasst das Aufnehmen des Bildes das Aufnehmen eines Wärmebildes des Wechselwirkungsbereichs. Typischerweise lassen sich die abfließenden Schlacketropfen im Wärmebild des Wechselwirkungsbereichs besonders gut erkennen, welches dem Prozesseigenleuchten des Schneidprozesses, speziell eines Laserschneidprozesses, bei einer Wellenlänge, die von der Schmelze emittiert wird, entspricht. Das Wärmebild insbesondere im NIR-A-Bereich, z.B. bei Wellenlängen um ca. 800 - 1100 nm, hat sich für die Detektion der Schlacketropfen anhand des Fehlens von Wärmestrahlung in einem von den Schlacketropfen abgeschirmten Bereich des Wärmebilds als besonders günstig erwiesen. Das Wärmebild kann mittels einer geeigneten, in diesem Wellenlängenbereich sensitiven Kamera erfasst werden. Eine Detektion des Prozessleuchtens bzw. die Aufnahme eines Bildes des Wechselwirkungsbereichs ist auch bei anderen Wellenlängen, z.B. im UV-Bereich, möglich. In diesem Fall kann beispielsweise die vom Plasma eines Plasmastrahls hervorgerufene Prozessstrahlung detektiert werden.

Bei einer weiteren Variante umfasst das Aufnehmen des Bildes das Aufnehmen eines fremdbeleuchteten Bildes des Wechselwirkungsbereichs. Durch eine Fremdbeleuchtung, beispielsweise eine Auflichtbeleuchtung, des Wechselwirkungsbereichs bzw. des zu überwachenden Bereichs des Werkstücks mit Strahlung bei geeigneten Wellenlängen, z.B. im sichtbaren Wellenlängenbereich (VIS) können Konturen an der Oberseite des Werkstücks erkennbar gemacht werden. Die Schlacketropfen werden in diesem Fall detektiert, wenn die Oberfläche bzw. die Oberseite des Werkstücks im Bereich des Schlacketropfens nicht mehr sichtbar ist. Es versteht sich, dass auch eine kombinierte Erfassung des Wärmebildes und des fremdbeleuchteten Bildes des Wechselwirkungsbereichs möglich ist.

Bei einer Variante wird das Bild des Wechselwirkungsbereichs koaxial zur Strahlachse des Hochenergiestrahls aufgenommen. Dies ermöglicht eine richtungsunabhängige Beobachtung. Die Auskopplung der Sekundärstrahlung (Wärmestrahlung) aus dem Strahlengang des Hochenergiestrahls für die koaxiale Beobachtung kann z.B. mittels eines Scraper-Spiegels oder eines Dichroit-Spiegels erfolgen. Eine Auflichtbeleuchtung ist zwar vorteilhaft, aber nicht zwingend erforderlich.

Bei einer Weiterbildung dieser Variante wird das Bild des Wechselwirkungsbereichs durch eine Düsenöffnung einer Laserbearbeitungsdüse zum Durchtritt des Laserstrahls auf das Werkstück, d.h. koaxial zum Bearbeitungsstrahl, aufgenommen. In diesem Fall wird das Bild des zu überwachenden Bereichs des Werkstücks durch die Laserschneiddüse sowie ggf. durch eine Fokussierlinse hindurch von einer Kamera aufgenommen. Beispielsweise kann beim CO₂-Laserstrahlschneiden der zu überwachende Bereich des Werkstücks koaxial zum Laserstrahl mittels einer Kamera durch eine Linse aus einem für CO₂-Laserstrahlung transparenten Material, z.B. ZnSe, und die Laserschneiddüse hindurch beobachtet werden. Es versteht sich, dass bei der Verwendung von Laserstrahlung mit anderen Wellenlängen optische Elemente aus bei der jeweiligen Laser-Wellenlänge transmissivem Material verwendet werden können. Auch kann an Stelle eines transmissiven Fokussierelements bzw. einer transmissiven Fokussiereinrichtung ein reflektierendes Fokussierelement, z.B. ein (off-axis) Parabolspiegel, eingesetzt werden.

Bei einer weiteren Weiterbildung wird zur Detektion der Schlacketropfen das aufgenommene Bild (nur) am Rand der Innenkontur der Düsenöffnung typischerweise an dem der Schneidfront entgegengesetzten Endes des Wechselwirkungsbereichs ausgewertet. Typischerweise treten die Schlacketropfen in einem sich unmittelbar an den Rand der Innenkontur der Düsenöffnung anschließenden Bereich auf, so dass es für die Auswertung des aufgenommenen Bildes ausreichend ist, wenn der von der Innenkontur der Düsenöffnung gebildete Randbereich genau untersucht wird, um eine schnelle Detektion der Schlacketropfen und damit ein schnelles Erkennen eines Schnittabrisses zu gewährleisten.

Bei einer weiteren Variante werden die Schlacketropfen anhand des Auftretens eines lokalen Intensitätsminimums des Bildes des der Schneidfront entgegengesetzten Endes des Wechselwirkungsbereichs detektiert. Typischerweise erzeugen die Schlacketropfen im Wärmebild des Wechselwirkungsbereichs ein Intensitätsminium, so dass beim Vorliegen eines solchen Intensitätsminiums auf die Existenz von Schlacketropfen geschlossen werden kann. Der gemessene Wert für die Intensität der Wärmestrahlung im Bereich des Intensitätsminiums entspricht hierbei ungefähr dem Wert bzw. liegt geringfügig unter dem Wert der Intensität der Wärmestrahlung, welcher im zu überwachenden Bereich außerhalb des Wechselwirkungsbereichs gemessen wird.

Bei einer weiteren Variante werden die Schlacketropfen anhand einer Änderung der Geometrie des Wechselwirkungsbereichs an dessen der Schneidfront entgegengesetztem Ende detektiert. Die Schlacketropfen können beispielsweise dazu führen, dass das ansonsten konvex (nach außen) gekrümmte Ende des Wechselwirkungsbereichs im Wärmebild seine Geometrie verändert und insbesondere eine annähernd gerade oder ggf. konkav (d.h. in den Wechselwirkungsbereich hinein) gekrümmte Geometrie annimmt.

Bei einer weiteren Variante wird in den Schneidprozess bei Erkennung des Schnittabrisses steuernd oder regelnd eingegriffen. Beispielsweise können bei beginnendem Schnittabriss die Schneidparameter des Schneidprozesses geeignet (gesteuert oder geregelt) angepasst werden, um einem Schnittabriss bei der weiteren Durchführung des Laserschneidprozesses entgegen zu wirken. Es ist alternativ aber auch möglich, den Schneidprozess beim Erkennen des Schnittabrisses abzubrechen oder ggf. den Schneidprozess neu anzufahren, um die betroffene Stelle nochmals zu bearbeiten.

Die Erfindung betrifft auch ein Computerprogrammprodukt, welches Codemittel aufweist, die zur Durchführung aller Schritte des oben beschriebenen Verfahrens angepasst sind, wenn das Computerprogramm auf einer Datenverarbeitungsanlage abläuft. Bei der Datenverarbeitungsanlage kann es sich beispielsweise um eine Steuer- und Regeleinrichtung und/oder um eine Auswerteeinrichtung handeln.

Ein weiterer Aspekt der Erfindung betrifft eine Vorrichtung der eingangs genannten Art, weiter umfassend: eine Auswerteeinrichtung, die zur Auswertung des aufgenommenen Bildes, zur Detektion von Schlacketropfen an einem der Schneidfront entgegengesetzten Ende des Wechselwirkungsbereichs sowie zum Erkennen des Schnittabrisses anhand des Auftretens der Schlacketropfen ausgebildet bzw. programmiert ist.

Zusätzlich zur Bilderfassungseinrichtung, die zur Überwachung des Schneidprozesses ein (Ab-)bild eines Ausschnitts (d.h. eines überwachten Bereichs) des Werkstücks bei einem Schneidvorgang, d.h. bei einer Relativbewegung zwischen Hochenergiestrahl und Werkstück, aufnimmt, ist bei der erfindungsgemäßen Vorrichtung eine Auswerteeinheit vorgesehen, die ausgebildet bzw. programmiert ist, anhand des aufgenommenen Bildes eine Detektion der Schlacketropfen im Nachlauf des Schneidprozesses vorzunehmen und beim (wiederholten) Detektieren von Schlacketropfen auf einen Schnittabriss zu schließen.

Bei einer Ausführungsform ist die Bilderfassungseinrichtung zur Aufnahme eines Wärmebildes bzw. des Prozesseigenleuchtens des Wechselwirkungsbereichs ausgebildet, d.h. diese ist zumindest im NIR/IR-Wellenlängenbereich sensitiv. Mittels einer solchen Bilderfassungseinrichtung kann anhand eines im NIR/IR-Bereich aufgenommenen Bildes eine Detektion der Schlacketropfen und damit eine Erkennung des Schnittabrisses erfolgen. Der Wechselwirkungsbereich bzw. dessen Geometrie kann hierbei über einen geeigneten Wellenlängen-Filter, welcher für Wellenlängen z.B. im nahen Infrarotbereich oder im UV-Bereich (zur Detektion des Plasma-Leuchtens eines Plasmastrahls) durchlässig ist, mittels der Bilderfassungseinrichtung beobachtet werden. Es versteht sich, dass die Bilderfassungseinrichtung unterschiedliche Detektoren zur Erfassung des Wechselwirkungsbereichs sowie zur Erfassung von Materialbegrenzungen des Werkstücks aufweisen kann.

In einer weiteren Ausführungsform ist die Bilderfassungseinrichtung zur Aufnahme eines fremdbeleuchteten Bildes des Wechselwirkungsbereichs ausgebildet. Zur Fremdbeleuchtung, z.B. zur Auflichtbeleuchtung, kann eine zusätzliche Beleuchtungsquelle vorgesehen sein, welche die Beleuchtungsstrahlung entweder koaxial zum Laserstrahl oder off-axis auf das Werkstück, genauer gesagt auf den zu überwachenden Bereich des Werkstücks, richtet.

Die Verwendung eines einzigen Detektors, z.B. einer CCD- oder CMOS-Kamera, in Verbindung mit einem geeigneten Wellenlängenfilter zur Erfassung sowohl des Wechselwirkungsbereichs im NIR/IR-Bereich als auch von Materialbegrenzungen (typischerweise im sichtbaren Wellenlängenbereich) ist vorteilhaft, da sowohl Platz sparend als auch kostengünstig.

Bei einer weiteren Ausführungsform ist die Bilderfassungseinrichtung ausgebildet, den zu überwachenden Bereich koaxial zur Strahlachse des Hochenergiestrahls aufzunehmen. Eine koaxiale Erfassung des zu überwachenden Bereichs ist schneidrichtungsunabhängig möglich. Es versteht sich, dass die Bilderfassungseinrichtung ggf. auch zur nicht-koaxialen Aufnahme des zu überwachenden Bereichs ausgebildet sein kann.

Bei einer Weiterbildung ist die Bilderfassungseinrichtung zur Aufnahme des Bildes des Wechselwirkungsbereichs durch eine Düsenöffnung einer Laserbearbeitungsdüse für den Durchtritt des Laserstrahls auf das Werkstück hindurch ausgebildet. In diesem Fall erfolgt eine Beobachtung des zu überwachenden Bereichs durch die Laserbearbeitungsdüse hindurch, d.h. koaxial zum Laserstrahl, wobei die typischerweise runde Innenkontur der Laserbearbeitungsdüse die Begrenzung des zu überwachenden Bereichs bildet.

Bei einer weiteren Ausführungsform ist die Auswerteeinrichtung ausgebildet bzw. programmiert, zur Detektion der Schlacketropfen das aufgenommene Bild (ggf. ausschließlich) am Rand der Innenkontur der Düsenöffnung auszuwerten. Die Schlacketropfen bilden sich im Nachlauf zum Schneidprozess, d.h. am dem der Schneidfront entgegengesetzten Ende des Wechselwirkungsbereichs, der sich typischerweise am Rand der Innenkontur der Düsenöffnung befindet. Daher kann durch das Auswerten des aufgenommenen Bildes (ggf. ausschließlich) in diesem Randbereich eine Detektion der Schlacketropfen und damit das Erkennen des Schnittabrisses erfolgen.

Bei einer weiteren Ausführungsform ist die Auswerteeinrichtung ausgebildet bzw. programmiert, die Schlacketropfen anhand des Auftretens eines lokalen Intensitätsminimums des Bildes des der Schneidfront entgegengesetzten Endes des Wechselwirkungsbereichs zu detektieren. Die Schlacketropfen führen typischerweise zu einer Abschattung des Wechselwirkungsbereichs an dessen der Schneidfront entgegengesetzten Ende, so dass durch das Detektieren eines Intensitätsminimums in diesem Bereich auf das Vorliegen von Schlacketropfen geschlossen werden kann.

Zusätzlich oder alternativ kann die Detektion der Schlacketropfen auch anhand einer Detektion von Änderungen in der Geometrie der Wechselwirkungszone an deren der Schneidfront entgegengesetztem Ende durch die Auswerteeinrichtung detektiert werden, da sich die Geometrie des Wechselwirkungsbereichs dort beim Auftreten von Schlacketropfen gegenüber der Geometrie bei einem Gutschnitt bzw. beim Vorliegen einer Gratbildung unterscheidet, wie weiter oben näher beschrieben wurde. Die beiden Möglichkeiten zur Detektion der Schlacketropfen über das Intensitätsminium bzw. über die Änderung der Geometrie des Wechselwirkungsbereichs sind grundsätzlich sowohl bei der Aufnahme eines Wärmebildes als auch eines fremdbeleuchteten Bildes des Wechselwirkungsbereichs möglich.

Der von der Auswerteeinheit erkannte Schnittabriss kann über eine Bewertung, die sowohl in der Auswerteeinheit selbst als auch in einer dieser nachgelagerten Logikeinheit (z.B. einer Steuer- oder Regeleinrichtung) erfolgen kann, zur Beeinflussung von Parametern des Schneidprozesses herangezogen werden, um dem beginnenden Schnittabriss entgegen zu wirken. Als Parameter des Schneidprozesses, auf die zu diesem Zweck Einfluss ausgeübt werden kann, ist neben der Vorschubgeschwindigkeit, die zur Vermeidung eines Schnittabrisses reduziert werden sollte, beispielsweise die Leistung des Hochenergiestrahls zu nennen, die erhöht werden sollte, um einen Schnittabrisses zu vermeiden. Auch kann ggf. die Fokuslage bzw. der Abstand zwischen einem für die schneidende Bearbeitung vorgesehenen Schneidkopf und dem Werkstück beeinflusst werden, um eine ggf. vorliegende Defokussierung zu korrigieren, da diese einen Schnittabriss ebenfalls begünstigen kann.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Vorrichtung zur Überwachung und zur Regelung eines Laserschneidprozesses mit einer Bilderfassungseinrichtung und einer Auswerteeinrichtung,
- Fig. 2: eine Darstellung der Oberseite und der Unterseite eines Werkstücks, bei dem ein Laserschneidprozess mit unterschiedlichen Vorschubgeschwindigkeiten durchgeführt wurde,
- Fig. 3a: eine Darstellung eines mit der Bilderfassungseinrichtung aufgenommenen Wärmebildes einer Wechselwirkungszone bei einem Gutschnitt,
- Fig. 3b: eine Darstellung des Wärmebildes analog Fig. 3a beim Vorliegen einer Gratbildung, und
- Fig. 3c: eine Darstellung des Wärmebildes analog Fig. 3a beim Vorliegen eines Schnittabrisses.

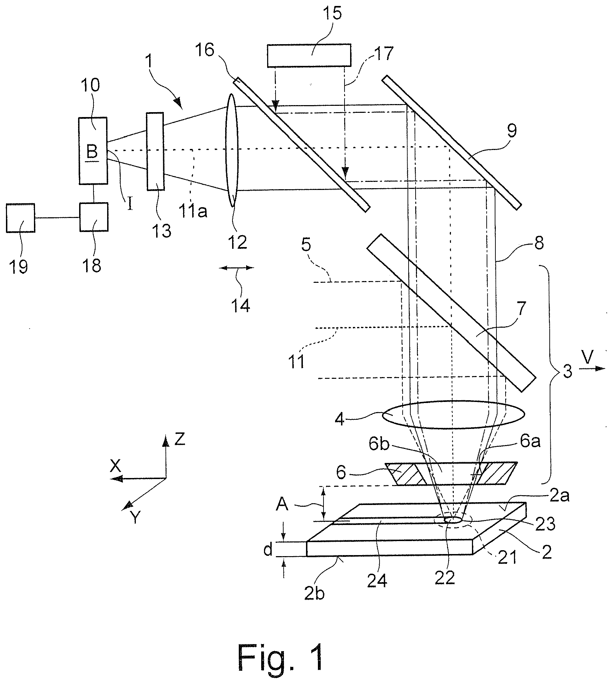

**Fig. 1** zeigt einen beispielhaften Aufbau einer Vorrichtung 1 zur Prozessüberwachung und -regelung eines Laserschneidprozesses an einem Werkstück 2 mittels einer CO₂-Laserbearbeitungsanlage, von der in Fig. 1 nur eine Bearbeitungseinheit 3 (Teil eines Laser-Bearbeitungskopfes) mit einer Fokussierlinse 4 aus Zinkselenid zur Fokussierung eines CO₂-Laserstrahls 5 der Laserbearbeitungsanlage, einer Schneidgas-Düse 6 sowie mit einem Umlenkspiegel 7 dargestellt ist. Im vorliegenden Fall ist der Umlenkspiegel 7 teildurchlässig ausgebildet und bildet ein eintrittsseitiges Bauteil für die Vorrichtung 1 zur Prozessüberwachung.

Der Umlenkspiegel 7 reflektiert den einfallenden CO₂-Laserstrahl 5 (mit einer Wellenlänge von ca. 10 µm) und transmittiert für die Prozessüberwachung relevante, vom Werkstück 2 reflektierte sowie von einem Wechselwirkungsbereich 22 des CO2-Laserstrahls 5 mit dem Werkstück 2 emittierte Strahlung 8 in einem Wellenlängenbereich, der im vorliegenden Beispiel zwischen ca. 550 nm und 2000 nm liegt. Alternativ zum teildurchlässigen Umlenkspiegel 7 kann auch ein Scraperspiegel oder ein Lochspiegel eingesetzt werden, um die Prozessstrahlung 8 der Vorrichtung 1 zuzuführen.

In der Vorrichtung 1 ist hinter dem teildurchlässigen Spiegel 7 ein weiterer Umlenkspiegel 9 angeordnet, welcher die Prozessstrahlung 8 auf eine geometrisch hochauflösende Kamera 10 als Bilderfassungseinheit umlenkt. Bei der Kamera 10 kann es sich um eine Hochgeschwindigkeitskamera handeln, die koaxial zur Laserstrahlachse 11 bzw. zur Verlängerung der Laserstrahlachse 11a und somit richtungsunabhängig angeordnet ist. Prinzipiell ergibt sich die Möglichkeit der Aufnahme des Bildes durch die Kamera 10 auch im Auflichtverfahren im VIS-Wellenlängenbereich, ggf. auch im NIR-Wellenlängenbereich, sofern eine zusätzliche in diesem Wellenlängenbereich strahlende Beleuchtungsquelle vorgesehen ist, sowie alternativ die Aufnahme des Prozesseigenleuchtens in den Wellenlängenbereichen UV und NIR/IR.

Für die Abbildung ist im vorliegenden Beispiel zwischen dem teildurchlässigen Spiegel 7 und der Kamera 10 ein in Fig. 1 als Linse dargestelltes abbildendes, fokussierendes optisches System 12 vorgesehen, welches die für die Prozessüberwachung relevante Strahlung 8 auf die Kamera 10 fokussiert.

Bei dem in Fig. 1 gezeigten Beispiel ist ein Filter 13 vor der Kamera 10 von Vorteil, wenn weitere Strahlungs- bzw. Wellenlängenanteile von der Erfassung mit der Kamera 10 ausgeschlossen werden sollen. Der Filter 13 kann z.B. als schmalbandiger Bandpassfilter ausgebildet sein. Die Lage der Kamera 10 sowie des im vorliegenden Beispiel vorhandenen abbildenden optischen Elementes 12 und/oder des Filters 13 entlang der Laserstrahlachse 11 ist über ein dem Fachmann bekanntes, zur Vereinfachung durch einen Doppelpfeil dargestelltes Positioniersystem 14 einstell- sowie bei Bedarf veränderbar.

Die Kamera 10 wird im vorliegenden Beispiel im Auflichtverfahren betrieben, d.h. es ist eine zusätzliche Beleuchtungsquelle 15 oberhalb des Werkstücks 2 vorgesehen, welche über einen weiteren teildurchlässigen Spiegel 16 Beleuchtungsstrahlung 17 koaxial zur Laserstrahlachse 11 in den Strahlengang einkoppelt. Als zusätzliche Beleuchtungsquelle 15 können Laserdioden oder Diodenlaser vorgesehen werden, die wie in Fig. 1 gezeigt koaxial, aber auch off-axis zur Laserstrahlachse 11 angeordnet werden können. Die zusätzliche Beleuchtungsquelle 15 kann beispielsweise auch außerhalb (insbesondere neben) der Bearbeitungseinheit 3 angeordnet und auf das Werkstück 2 gerichtet sein; alternativ kann die Beleuchtungsquelle 15 innerhalb der Bearbeitungseinheit 3 angeordnet sein, jedoch nicht koaxial zum Laserstrahl 5 auf das Werkstück 2 gerichtet sein. Es versteht sich, dass die Vorrichtung 1 auch ohne eine zusätzliche Beleuchtungsquelle 15 betrieben werden kann.

Bei dem in Fig. 1 dargestellten Beispiel nimmt die Kamera 10 während eines Laser-Brennschneidprozesses ein Bild B eines zu überwachenden Bereichs 21 des Werkstücks 2 auf, welcher den Wechselwirkungsbereich 22 enthält. Während des Brennschneidens erfolgt eine Relativbewegung zwischen dem Werkstück 2 und der Düse 6 bzw. der Bearbeitungseinheit 3 (Laserbearbeitungskopf) durch die Bewegung der Düse 6 bzw. der Bearbeitungseinheit 3 entlang der positiven X-Richtung (vgl. Pfeil). Alternativ oder zusätzlich kann das Werkstück 2 in entgegengesetzter Richtung (negative X-Richtung) relativ zur Düse 6 bzw. zur Bearbeitungseinheit 3 (Laserbearbeitungskopf) bewegt werden. In jedem Fall erfolgt eine Relativbewegung zwischen dem Werkstück 2 und der Bearbeitungseinheit 3 mit einer als Vorschubgeschwindigkeit v bezeichneten Relativgeschwindigkeit. Bei dem Brennschneidprozess bildet sich im Vorlauf zum Wechselwirkungsbereich 22 eine Schneidfront 23 aus, an die sich im Nachlauf (in negativer X-Richtung) ein Schnittspalt 24 (im Folgenden auch gelegentlich als Schnittfuge bezeichnet) anschließt.

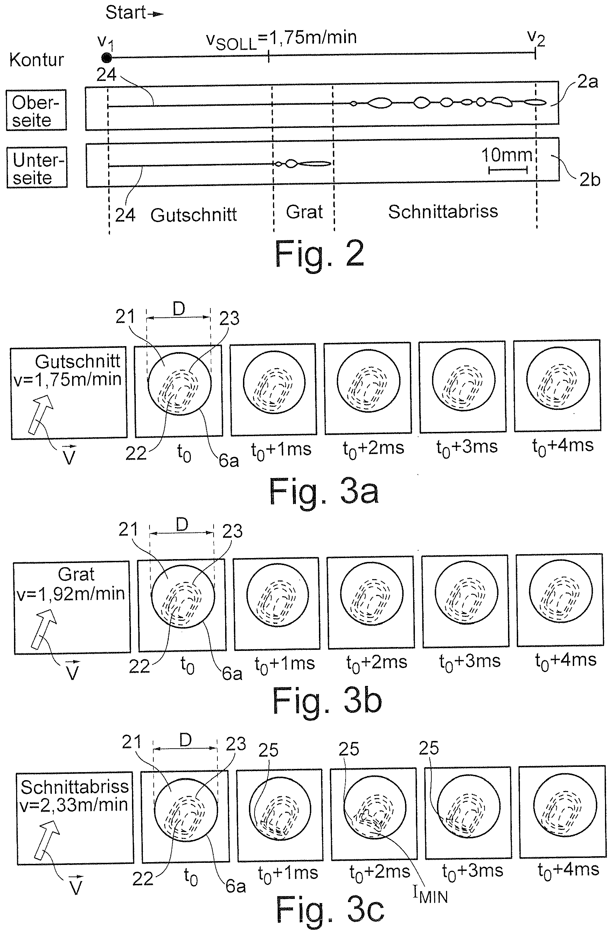

**Fig. 2** zeigt ein Werkstück 2 (aus Baustahl) nach der Durchführung eines Testschnitts mit einer linienförmigen Soll-Schnittkontur sowohl in einer Draufsicht auf die Oberseite 2a als auch auf die Unterseite 2b. Bei dem Testschnitt wurde an dem Werkstück 2 eine lineare Geschwindigkeitsrampe (d.h. mit konstanter Beschleunigung) zwischen einer minimalen Vorschubgeschwindigkeit v₁ und einer maximalen Vorschubgeschwindigkeit v₂ gefahren.

Wie anhand von Fig. 2 gut zu erkennen ist, wird bei vergleichsweise kleinen Vorschubgeschwindigkeiten v unterhalb der für die oben genannten Prozessparameter standardmäßig verwendeten Vorschubgeschwindigkeit vₛₒₗₗ = 1,75 m/min ein Gutschnitt erreicht, d.h. sowohl an der Oberseite als auch an der Unterseite des Werkstücks 2 wird ein durchgehender, gerader Schnittspalt 24 erhalten. Bei Vorschubgeschwindigkeiten v, die geringfügig größer als die Standard-Vorschubgeschwindigkeit vₛₒₗₗ sind, setzt eine Gratbildung ein, wie in Fig. 2 an der Unterseite des Werkstücks 2 zu erkennen ist. Bei noch höheren Vorschubgeschwindigkeiten v bis zur maximalen Vorschubgeschwindigkeit v₂ tritt ein Schnittabriss auf, d.h. der Laserstrahl 5 zieht an der Oberseite des Werkstücks 2 eine Furche und der Schnittspalt 24 ist nicht mehr über die gesamte Dicke d des Werkstücks 2 ausgeprägt.

Bei dem in Fig. 2 gezeigten Schnittabriss kann die Schlacke nicht mehr nach unten aus dem Schnittspalt 24 ausgetrieben werden - sie strömt vielmehr entgegen der Vorschubrichtung (in negativer X-Richtung in Fig. 1) in dem nur teilweise ausgeprägten Schnittkanal nach hinten. Das bei der Reaktion mit dem Schneid-Sauerstoff entstehende Eisenoxid (FeO) des Baustahls weist hierbei eine geringere Dichte als das ursprüngliche Eisen (Fe) auf. Das entstehende Schlackevolumen erfährt somit sowohl durch die Herabsetzung der FeO-Dichte als auch durch die Massenzunahme der Oxidation eine Volumenzunahme gegenüber dem Grundwerkstoff des Werkstücks 2, was dazu führt, dass die nicht nach unten austreibbare Schlacke im Nachlauf nach hinten an der Oberseite 2a des Werkstücks 2 aus dem Schnittspalt 24 heraustritt.

Das Auftreten von im Nachlauf zum Wechselwirkungsbereich 22 herausquellenden Schlacketropfen kann in einem (Wärme-)bild B des überwachten Bereichs 21 von der Kamera 10 detektiert werden, wie nachfolgend anhand von **Fig. 3c** erklärt wird, die jeweils ein Bild B des überwachten Bereichs 21 im NIR/IR-Bereich beim Baustahl-Brennschneiden zeigen. Die Wärmestrahlung wurde mit der Kamera 10 unter Verwendung eines Filters 13 aufgenommen, der nur für die Wärmestrahlung 8 im (nahen) Infrarotbereich durchlässig war, wobei die gestrichelten Konturen die Grenzen zwischen Bereichen unterschiedlicher Intensität der Wärmestrahlung 8 (vgl. Fig. 1) darstellen, wobei die Konturen des Werkstücks 2 nicht zu erkennen sind. Bei der in dem Bild B erfassten Prozess- bzw. Wärmestrahlung 8 handelt es sich um ein Eigenleuchten des Laserschneidprozesses, welches typischerweise nicht unmittelbar mit einer Temperaturverteilung gleichgesetzt werden kann. Dennoch wird zur Vereinfachung die gemessene Intensitätsverteilung I der Kamera 10 auch als Wärmebild bezeichnet. Das von der Kamera 10 aufgenommene Bild B wird durch die kreisförmige Innenkontur 6a einer Düsenöffnung 6b der Laserschneiddüse 6 (vgl. Fig. 1) begrenzt.

Sowohl bei einem Gutschnitt (Fig. 3a, v = 1,75 m/min) als auch bei Gratbildung (Fig. 3b, v = 1,92 m/min) sind in der koaxial aufgenommenen Sequenz von fünf Bildern B, die ausgehend von einem vorgegebenen Zeitpunkt t₀ in Abständen von 1 ms aufgenommen wurden, keine Auffälligkeiten festzustellen. Die geometrische Form des Wechselwirkungsbereichs 22 bzw. des (nicht gezeigten) Schnittspalts sowie die Strahlungsemission der Schmelze auf der Schnittfront 23 zwischen den einzelnen Bildern B der gezeigten Sequenzen sind annähernd homogen.

Bei der in Fig. 3c gezeigten Sequenz von fünf Bildern B sind jedoch beim zweiten bis vierten Bild B Auffälligkeiten zu erkennen, und zwar deutliche Schlacketropfen im hinteren Bereich der Innenkontur 6a der Laserbearbeitungsdüse 6. Die kreisförmige Innenkontur 6a der Laserschneiddüse 6 begrenzt hierbei das von der Kamera 10 aufgenommene Bild B (Durchmesser D der Innenkontur 6a im vorliegenden Beispiel D = 1,4 mm). Die Zone des überwachten Bereichs 21, in welcher die Schlacketropfen 25 auftreten, ist in Fig. 3c jeweils durch eine elliptische Markierung gekennzeichnet.

Zur Detektion der Schlacketropfen 25 kann das aufgenommene Bild B insbesondere in der Nähe der Innenkontur 6a der Laserbearbeitungsdüse 6 von einer Auswerteeinrichtung 18 (vgl. Fig. 1) ausgewertet werden. Hierbei kann ausgenutzt werden, dass die Richtung der Vorschubrichtung v relativ zum aufgenommenen Bild B der Vorrichtung 1 bzw. der Auswerteeinrichtung 18 bekannt ist, so dass die Auswertung des Bildes B sich im Idealfall auf einen vergleichsweise kleinen Bereich an einem der Schneidfront 23 entgegengesetzten Ende des Wechselwirkungsbereichs 22 beschränken kann.

Für die Erkennung der Schlacketropfen 25 kann es ausreichend sein, wenn an dem der Schneidfront 23 entgegengesetzten Ende des Wechselwirkungsbereichs 22 das Auftreten eines lokalen Intensitätsminiums I_{MIN} detektiert wird. Zusätzlich oder alternativ kann die Detektion auch durch das Erkennen einer Veränderung der Geometrie des der Schneidfront 23 entgegengesetzten Endes des Wechselwirkungsbereichs 22 zwischen mehreren aufgenommenen Bildern erfolgen, z.B. wenn dessen Außenrand von einer konvexen in eine z.B. konkave Geometrie übergeht, wie dies beim dritten Bild B der in Fig. 3c gezeigten Sequenz der Fall ist.

Es versteht sich, dass die Wärmebilder B gegebenenfalls mit (bei Wellenlängen im sichtbaren Bereich) detektierten Materialbegrenzungen (Konturen des Werkstücks 2) verglichen werden können, um die Detektion des Schlacketropfens 25 zu verbessern. Auch kann die Detektion der Schlacketropfen 25 ggf. ohne die Aufnahme eines Wärmebildes, d.h. allein anhand der Detektion von Materialbegrenzungen erfolgen. In diesem Fall wird typischerweise ein fremdbeleuchtetes Bild des Wechselwirkungsbereichs 22 erzeugt und die Schlacketropfen 25 werden detektiert, wenn die Oberfläche bzw. die Oberseite 2a des Werkstücks 2 im Bereich des Schlacketropfens 25 nicht mehr sichtbar ist. Es versteht sich weiterhin, dass zur parallelen Detektion von Materialbegrenzungen und Wärmebild die Bilderfassungseinrichtung 10 auch weitere Kameras bzw. Detektoren aufweisen kann.

Das wiederholte Auftreten bzw. Detektieren von Schlacketropfen 25 wird von der Auswerteeinrichtung 18 als Schnittabriss erkannt. Günstig ist hierbei, dass es keinen anderen Fehlerfall beim Brennschneiden gibt, der nach hinten oben aus dem Schnittspalt 24 austretende Schlacketropfen 25 verursacht, so dass es sich hierbei um ein eineindeutiges Merkmal für einen Schnittabriss im Baustahl handelt. Anhand dieses Merkmals ist es daher möglich, eindeutig auf den Fehlschnittfall "Schnittabriss Baustahl" zurückzuschließen. Bei einem Gutschnitt bzw. bei Gratbildung (vgl. Fig. 3a und Fig. 3b) ist eine solche Schlacke-Strömung noch nie beobachtet worden, da die Schlacke bei einem Gutschnitt und auch beim Vorliegen von Gratbildung nach unten aus dem Schnittspalt 24 ausgetrieben wird.

Die Auswerteeinrichtung 18 steht mit einer ebenfalls in Fig. 1 gezeigten Steuer- bzw. Regeleinrichtung 19 in signaltechnischer Verbindung, welche den Laserschneidprozess steuert bzw. regelt, und zwar in Abhängigkeit von durch die Auswerteeinrichtung 18 ermittelten charakteristischen Kenngrößen des Laserschneidprozesses, wie beispielsweise das Vorliegen eines Schnittabrisses. Die Steuer-/Regeleinrichtung 19 kann bei beginnendem Schnittabriss die Schneidparameter des Laserschneidprozesses geeignet anpassen, um einem Schnittabriss bei der weiteren Durchführung des Laserschneidprozesses entgegen zu wirken. Es ist alternativ aber auch möglich, dass die Steuer- bzw. Regeleinrichtung 19 den Schneidprozess beim Erkennen des Schnittabrisses abbricht oder ggf. den Schneidprozess neu anfährt, um die betroffene Stelle nochmals zu bearbeiten und das Werkstück 2 in dem vom Schnittabriss betroffenen Bereich vollständig durchzuschneiden.

Eine sichere Detektion von Fehlschnitten (hier: eines Schnittabrisses) verbessert die Produktivität, indem Kosten durch nicht entstehende Ausschussteile sowie Zeit durch nicht notwendige Nacharbeit eingespart wird. Es versteht sich, dass die hier beschriebene Erkennung eines Schnittabrisses auch bei (Brenn-)Schneidprozessen mit anderen Hochenergiestrahlen, beispielsweise mit Plasmastrahlen, durchgeführt werden kann. Auch ist die Erkennung des Schnittabrisses nicht auf Edelstahl, speziell auf Baustahl, als Werkstück-Material beschränkt, sondern kann auch bei anderen Materialien angewendet werden.

## Patentansprüche

1. Verfahren zum Erkennen eines Schnittabrisses beim Schneiden eines Werkstücks (2) mit einem Hochenergiestrahl (5), insbesondere mit einem Laserstrahl, umfassend:
Aufnehmen eines Bildes (B) eines zu überwachenden Bereichs (21) des Werkstücks (2), der einen Wechselwirkungsbereich (22) des Hochenergiestrahls (5) mit dem Werkstück (2) umfasst,
**gekennzeichnet durch**
Auswerten des aufgenommenen Bildes (B) zur Detektion von Schlacketropfen (25) an einem einer Schneidfront (23) entgegengesetzten Ende des Wechselwirkungsbereichs (22), die entgegen einer Vorschubrichtung (v) nach hinten zur Oberseite (2a) des Werkstücks (2) strömen und dort aus einem beim Schneiden gebildeten Schnittspalt (24) austreten, sowie
Erkennen des Schnittabrisses anhand des Auftretens der Schlacketropfen (25).

2. Verfahren nach Anspruch 1, bei welchem das Aufnehmen des Bildes (B) das Aufnehmen eines Wärmebildes des Wechselwirkungsbereichs (22) umfasst.

3. Verfahren nach Anspruch 1 oder 2, bei welchem das Aufnehmen des Bildes (B) das Aufnehmen eines fremdbeleuchteten Bildes des Wechselwirkungsbereichs (22) umfasst.

4. Verfahren nach einem der vorhergehenden Ansprüche, bei welchem das Bild (B) des Wechselwirkungsbereichs (22) koaxial zur Strahlachse (11) des Hochenergiestrahls (5) aufgenommen wird.

5. Verfahren nach Anspruch 4, bei welchem das Bild (B) des Wechselwirkungsbereichs (22) durch eine Düsenöffnung (6b) einer Laserbearbeitungsdüse (6) zum Durchtritt des Laserstrahls (5) auf das Werkstück (2) aufgenommen wird.

6. Verfahren nach Anspruch 5, bei dem zur Detektion der Schlacketropfen (25) das aufgenommene Bild (B) am Rand einer Innenkontur (6a) der Düsenöffnung (6b) ausgewertet wird.

7. Verfahren nach einem der vorhergehenden Ansprüche, bei dem die Schlacketropfen (25) anhand des Auftretens eines lokalen Intensitätsminimums (I_{MIN}) des Bildes (B) des der Schneidfront (23) entgegengesetzten Endes des Wechselwirkungsbereichs (22) detektiert werden.

8. Verfahren nach einem der vorhergehenden Ansprüche, bei dem die Schlacketropfen (25) anhand einer Änderung der Geometrie des Wechselwirkungsbereichs (22) an dessen der Schneidfront (23) entgegengesetztem Ende detektiert werden.

9. Verfahren zum thermischen Schneiden eines Werkstücks mit einem Hochenergiestrahl, umfassend ein Verfahren zum Erkennen eines Schnittabrisses beim Schneiden eines Werkstücks mit einem Hochenergiestrahl nach einem der vorhergehenden Ansprüche, bei dem bei Erkennung des Schnittabrisses steuernd oder regelnd in den Schneidprozess eingegriffen wird.

10. Computerprogrammprodukt, welches Codemittel aufweist, die zur Durchführung aller Schritte des Verfahrens nach einem der vorhergehenden Ansprüche 1 bis 8 angepasst sind, wenn das Computerprogramm auf einer Datenverarbeitungsanlage abläuft.

11. Vorrichtung zum Erkennen eines Schnittabrisses beim Schneiden eines Werkstücks (2) mit einem Hochenergiestrahl (5), insbesondere mit einem Laserstrahl, umfassend:
eine Bilderfassungseinrichtung (10) zur Aufnahme eines Bildes eines zu überwachenden Bereichs (21) des Werkstücks (2), der einen Wechselwirkungsbereich (22) des Hochenergiestrahls (5) mit dem Werkstück (2) umfasst,
**gekennzeichnet durch**
eine Auswerteeinrichtung (18), die zur Auswertung des aufgenommenen Bildes (B), zur Detektion von Schlacketropfen (25) an einem der Schneidfront (23) entgegengesetzten Ende des Wechselwirkungsbereichs (22), die entgegen einer Vorschubrichtung (v) nach hinten zur Oberseite (2a) des Werkstücks (2) strömen und dort aus einem beim Schneiden gebildeten Schnittspalt (24) austreten, sowie zum Erkennen des Schnittabrisses anhand des Auftretens der Schlacketropfen (25) ausgebildet ist.

12. Vorrichtung nach Anspruch 11, bei welcher die Bilderfassungseinrichtung (10) zur Aufnahme eines Wärmebildes des Wechselwirkungsbereichs (22) ausgebildet ist.

13. Vorrichtung nach Anspruch 11 oder 12, bei welcher die Bilderfassungseinrichtung (10) zur Aufnahme eines fremdbeleuchteten Bildes des Wechselwirkungsbereichs (22) ausgebildet ist.

14. Vorrichtung nach einem der Ansprüche 11 bis 13, bei welcher die Bilderfassungseinrichtung (10) ausgebildet ist, den zu überwachenden Bereich (21) koaxial zur Strahlachse (11) des Hochenergiestrahls (5) aufzunehmen.

15. Vorrichtung nach Anspruch 14, bei welcher die Bilderfassungseinrichtung (10) zur Aufnahme des Bildes (B) des Wechselwirkungsbereichs (22) durch eine Düsenöffnung (6b) einer Laserbearbeitungsdüse (6) zum Durchtritt des Laserstrahls (5) auf das Werkstück (2) hindurch ausgebildet ist.

16. Vorrichtung nach Anspruch 15, bei welcher die Auswerteeinrichtung (18) ausgebildet ist, zur Detektion der Schlacketropfen (25) das aufgenommene Bild (B) am Rand einer Innenkontur (6a) der Düsenöffnung (6b) auszuwerten.

17. Vorrichtung nach einem der Ansprüche 11 bis 16, bei welcher die Auswerteeinrichtung (18) ausgebildet ist, die Schlacketropfen (25) anhand des Auftretens eines lokalen Intensitätsminimums (I_{MIN}) des Bildes (B) des der Schneidfront (23) entgegengesetzten Endes des Wechselwirkungsbereichs (22) zu detektieren.

18. Vorrichtung nach einem der Ansprüche 11 bis 17, bei welche die Auswerteeinrichtung (18) ausgebildet ist, die Schlacketropfen (25) anhand einer Änderung der Geometrie des Wechselwirkungsbereichs (22) an dessen der Schneidfront (23) entgegengesetztem Ende zu detektieren.

## Claims

1. Method for detecting a cut break when cutting a workpiece (2) with a high energy beam (5), in particular with a laser beam, comprising:
recording an image (B) of a region (21) of the workpiece (2) to be monitored, which comprises an interaction region (22) of the high energy beam (5) with the workpiece (2),
**characterized by**
evaluating the recorded image (B) to detect slag droplets (25) at an end of the interaction region (22) opposite a cutting front (23), which droplets flow rearward towards the upper side (2a) of the workpiece (2), counter to a feed direction (v), and emerge there from a cut gap (24) formed during cutting, and
detecting the cut break based on the occurrence of the slag droplets (25).

2. Method according to Claim 1, in which the recording of the image (B) comprises recording a thermal image of the interaction region (22).

3. Method according to Claim 1 or 2, in which the recording of the image (B) comprises recording an externally-illuminated image of the interaction region (22).

4. Method according to one of the preceding claims, in which the image (B) of the interaction region (22) is recorded coaxially with respect to the beam axis (11) of the high energy beam (5).

5. Method according to Claim 4, in which the image (B) of the interaction region (22) is recorded through a nozzle opening (6b) of a laser machining nozzle (6) for the passage of the laser beam (5) onto the workpiece (2).

6. Method according to Claim 5, in which, to detect the slag droplets (25), the recorded image (B) is evaluated at the edge of an inner contour (6a) of the nozzle opening (6b).

7. Method according to one of the preceding claims, in which the slag droplets (25) are detected based on the occurrence of a local intensity minimum (I_{MIN}) of the image (B) of the end of the interaction region (22) opposite the cutting front (23) .

8. Method according to one of the preceding claims, in which the slag droplets (25) are detected based on a change in the geometry of the interaction region (22) at its end opposite the cutting front (23) .

9. Method for the thermal cutting of a workpiece with a high energy beam, comprising a method for detecting a cut break when cutting a workpiece with a high energy beam according to one of the preceding claims, in which, when the cut break is detected, a controlling or regulating intervention is made in the cutting process.

10. Computer program product which has code means which are adapted to perform all the steps of the method according to one of the preceding Claims 1 to 8 when the computer program runs on a data processing system.

11. Device for detecting a cut break when cutting a workpiece (2) with a high energy beam (5), in particular with a laser beam, comprising:
an image capture unit (10) for recording an image of a region (21) of the workpiece (2) which is to be monitored, which comprises an interaction region (22) of the high energy beam (5) with the workpiece (2),
**characterized by**
an evaluation unit (18), which is designed to evaluate the recorded image (B) to detect slag droplets (25) at an end of the interaction region (22) opposite the cutting front (23), which droplets flow rearward towards the upper side (2a) of the workpiece (2), counter to a feed direction (v), and emerge there from a cut gap (24) formed during cutting, and
to detect the cut break based on the occurrence of the slag droplets (25).

12. Device according to Claim 11, in which the image capture unit (10) is designed to record a thermal image of the interaction region (22).

13. Device according to Claim 11 or 12, in which the image capture unit (10) is designed to record an externally-illuminated image of the interaction region (22).

14. Device according to one of Claims 11 to 13, in which the image capture unit (10) is designed to record the region (21) to be monitored coaxially with respect to the beam axis (11) of the high energy beam (5).

15. Device according to Claim 14, in which the image capture unit (10) is designed to record the image (B) of the interaction region (22) through a nozzle opening (6b) of a laser machining nozzle (6) for the passage of the laser beam (5) onto the workpiece (2).

16. Device according to Claim 15, in which, to detect the slag droplets (25), the evaluation unit (18) is designed to evaluate the recorded image (B) at the edge of an inner contour (6a) of the nozzle opening (6b).

17. Device according to one of Claims 11 to 16, in which the evaluation unit (18) is designed to detect the slag droplets (25) based on the occurrence of a local intensity minimum (I_{MIN}) of the image (B) of the end of the interaction region (22) opposite the cutting front (23).

18. Device according to one of Claims 11 to 17, in which the evaluation unit (18) is designed to detect the slag droplets (25) based on a change in the geometry of the interaction region (22) at its end opposite the cutting front (23).

## Revendications

1. Procédé de détection d'une rupture de coupe lors du découpage d'une pièce (2) au moyen d'un faisceau (5) à haute énergie, en particulier d'un faisceau laser, consistant à :
enregistrer une image (B) d'une région (21) de la pièce (2) qui doit être surveillée et qui inclut une zone d'interaction (22) dudit faisceau (5) à haute énergie avec ladite pièce (2),
**caractérisé par**
une interprétation de l'image enregistrée (B) en vue de repérer, à une extrémité de la zone d'interaction (22) opposée à un front de coupe (23), des gouttes de scories (25) qui fluent en sens inverse d'une direction d'avance (v), vers l'arrière en direction de la face supérieure (2a) de la pièce (2) au niveau de laquelle elles sortent par un interstice de coupe (24) formé au cours du découpage, ainsi que par
une détection de la rupture de coupe sur la base de l'apparition desdites gouttes de scories (25).

2. Procédé selon la revendication 1, dans lequel l'enregistrement de l'image (B) inclut l'enregistrement d'une image thermique de la zone d'interaction (22).

3. Procédé selon la revendication 1 ou 2, dans lequel l'enregistrement de l'image (B) inclut l'enregistrement d'une image à illumination extérieure de la zone d'interaction (22).

4. Procédé selon l'une des revendications précédentes, dans lequel l'image (B) de la zone d'interaction (22) est enregistrée coaxialement à l'axe (11) du faisceau (5) à haute énergie.

5. Procédé selon la revendication 4, dans lequel l'image (B) de la zone d'interaction (22) est enregistrée à travers une ouverture (6b) d'une buse (6) d'usinage au laser, dévolue au passage du faisceau laser (5) en direction de la pièce (2).

6. Procédé selon la revendication 5, dans lequel, en vue du repérage des gouttes de scories (25), l'image enregistrée (B) est interprétée sur le bord d'un profil intérieur (6a) de l'ouverture (6b) de la buse.

7. Procédé selon l'une des revendications précédentes, dans lequel les gouttes de scories (25) sont repérées sur la base de l'apparition d'un minimum d'intensité locale (I_{MIN}) de l'image (B) de l'extrémité de la zone d'interaction (22) qui est opposée au front de coupe (23).

8. Procédé selon l'une des revendications précédentes, dans lequel les gouttes de scories (25) sont repérées sur la base d'une variation de la géométrie de la zone d'interaction (22) à l'extrémité de cette dernière qui est opposée au front de coupe (23).

9. Procédé de découpage thermique d'une pièce au moyen d'un faisceau à haute énergie, englobant un procédé conforme à l'une des revendications précédentes, affecté à la détection d'une rupture de coupe lors du découpage d'une pièce au moyen d'un faisceau à haute énergie, impliquant des interventions de commande ou de régulation dans le processus de découpage en cas de détection de ladite rupture de coupe.

10. Produit à programme informatique, muni de moyens de codage adaptés à la mise en oeuvre de toutes les étapes du procédé conforme à l'une des revendication 1 à 8 précédentes au cours du déroulement dudit programme informatique sur une installation de traitement de données.

11. Dispositif de détection d'une rupture de coupe lors du découpage d'une pièce (2) au moyen d'un faisceau (5) à haute énergie, en particulier d'un faisceau laser, comprenant :
un appareil (10) de capture d'images, conçu pour enregistrer une image d'une région (21) de la pièce (2) qui doit être surveillée et qui inclut une zone d'interaction (22) dudit faisceau (5) à haute énergie avec ladite pièce (2),
**caractérisé par**
un appareil d'interprétation (18) réalisé pour interpréter l'image enregistrée (B) en vue de repérer, à une extrémité de la zone d'interaction (22) opposée au front de coupe (23), des gouttes de scories (25) qui fluent en sens inverse d'une direction d'avance (v), vers l'arrière en direction de la face supérieure (2a) de la pièce (2) au niveau de laquelle elles sortent par un interstice de coupe (24) formé au cours du découpage, ainsi que pour détecter la rupture de coupe sur la base de l'apparition desdites gouttes de scories (25).

12. Dispositif selon la revendication 11, dans lequel l'appareil (10) de capture d'images est réalisé en vue d'enregistrer une image thermique de la zone d'interaction (22).

13. Dispositif selon la revendication 11 ou 12, dans lequel l'appareil (10) de capture d'images est réalisé en vue d'enregistrer une image à illumination extérieure de la zone d'interaction (22).

14. Dispositif selon l'une des revendications 11 à 13, dans lequel l'appareil (10) de capture d'images est réalisé en vue d'enregistrer, coaxialement à l'axe (11) du faisceau (5) à haute énergie, la région (21) devant être surveillée.

15. Dispositif selon la revendication 14, dans lequel l'appareil (10) de capture d'images est réalisé en vue d'enregistrer l'image (B) de la zone d'interaction (22) à travers une ouverture (6b) d'une buse (6) d'usinage au laser, dévolue au passage du faisceau laser (5) en direction de la pièce (2).

16. Dispositif selon la revendication 15, dans lequel l'appareil d'interprétation (18) est réalisé en vue d'interpréter l'image enregistrée (B) sur le bord d'un profil intérieur (6a) de l'ouverture (6b) de la buse, afin de repérer les gouttes de scories (25).

17. Dispositif selon l'une des revendications 11 à 16, dans lequel l'appareil d'interprétation (18) est réalisé en vue de repérer les gouttes de scories (25) sur la base de l'apparition d'un minimum d'intensité locale (I_{MIN}) de l'image (B) de l'extrémité de la zone d'interaction (22) qui est opposée au front de coupe (23).

18. Dispositif selon l'une des revendications 11 à 17, dans lequel l'appareil d'interprétation (18) est réalisé en vue de repérer les gouttes de scories (25) sur la base d'une variation de la géométrie de la zone d'interaction (22) à l'extrémité de cette dernière qui est opposée au front de coupe (23).
